# EUROPEAN PATENT SPECIFICATION

(11) **EP 2 679 942 B1**
(45) Date of publication and mention of the grant of the patent: **31.07.2019**
(21) Application number: 13174103.5
(22) Date of filing: 27.06.2013
(51) Int. Cl.: F25D 23/06, F25C 5/00, F25D 17/06

(54) **Refrigerator**
Kühlschrank
Réfrigérateur

(30) Priority: 27.06.2012 KR 20120069078
(43) Date of publication of application: 01.01.2014
(73) Proprietor: Samsung Electronics Co., Ltd., Gyeonggi-do 16677 (KR)
(72) Inventor: Jeong, Jin, Gyeonggi-do (KR); Lee, Jae Seung, Gyeonggi-do (KR); Kang, Sung Cheol, Gwangju-City (KR); Park, Sang Hyun, Gyeonggi-Do (KR); An, Jae Koog, Gwangju (KR)
(74) Representative: Walaski, Jan Filip

(56) References cited:
- CN-A- 102 261 786
- JP-A- S5 462 561

## Description

The following description relates to a refrigerator having an ice making compartment and a water dispensing system.

In general, a refrigerator is an apparatus configured to store foods fresh by having a storage compartment for storing foods and a cooling energy supplying device for supplying a cooling energy to the storage compartment. A refrigerator may be provided with an ice maker for generating ice.

For example, in a case of a side by side type refrigerator which has a refrigerating compartment and a freezing compartment on right and left sides inside a body of the refrigerator, respectively, an ice maker may be provided inside the freezing compartment. The ice maker generates ice with a cooling energy inside the freezing compartment.

However, in order to make ice in a side by side type refrigerator of this structure, the whole area inside a freezing compartment should be cooled down below freezing temperatures so that time and energy are inefficiently consumed.

Further, since a freezing compartment is closed by a freezing compartment door which is rotatably connected to a body of a refrigerator, the freezing compartment door should be opened in order to extract the ice inside the freezing compartment. Once the freezing compartment door is opened, the cooling energy inside the freezing compartment is easily discharged to an outside because the whole open front portion of the freezing compartment is exposed to the outside.

Additionally, the above-noted problem may occur in other types of refrigerators where an ice making compartment is provided in a refrigerating compartment and an ice maker inside the ice making compartment generates ice using other sources of cooling energy rather than a cooling air inside the refrigerating compartment, since the refrigerating compartment door is opened in order to extract the ice inside the ice making compartment of the refrigerating compartment, resulting in leakage of the cooling energy inside the refrigerating compartment.

JPS5462561 and CN102261786 disclose refrigerators including ice making compartments which are separate to the refrigerating and freezing compartments.

The present disclosure relates to a structure of a side by side type refrigerator which makes ice rapidly.

The present disclosure also relates to a structure of a side by side type refrigerator which minimizes a leakage of a cooling energy inside the refrigerator when an ice bucket is inserted into or drawn from the refrigerator.

The present disclosure further relates to a structure of a side by side type refrigerator with an ice maker and a dispenser which has a simplified water supplying pipe and a water supplying system with enhanced reliability.

Additional aspects and/or advantages will be set forth in part in the description which follows and, in part, will be apparent from the description, or may be learned by practice of the invention.

In accordance with an aspect of the present invention, there is provided a refrigerator according to claim 1.

In accordance with one aspect of the present disclosure, a refrigerator includes a body; a freezing compartment formed inside the body and having an open front portion; a refrigerating compartment formed inside the body and having an open front portion; a freezing compartment door rotatably connected to the body and closing the open front portion of the freezing compartment; a refrigerating compartment door rotatably connected to the body and closing the open front portion of the refrigerating compartment; and an ice making compartment formed between the freezing compartment and the refrigerating compartment inside the body and being accessible without opening the freezing compartment door and the refrigerating compartment door.

The refrigerator may further include a first intermediate insulation wall which insulates the ice making compartment from the freezing compartment and a second intermediate insulation wall which insulates the ice making compartment from the refrigerating compartment.

Also, the refrigerator may further include a front insulation wall which is formed in front of the ice making compartment and which insulates the ice making compartment.

The front insulation wall may have an opening through which an ice bucket storing ice is inserted into or drawn from the ice making compartment.

The ice bucket further comprises an insulation cover which closes the opening.

The insulation cover may have corresponding thickness to the front insulation wall.

The ice bucket is further configured to be inserted into or drawn from the ice making compartment without opening the freezing compartment door and the refrigerating compartment door.

Further, a front surface of the front insulation wall may be provided with a control panel which displays operation information of the refrigerator and receives operation commands to the refrigerator.

Meanwhile, the refrigerator may further include a cooling energy supplying device having a compressor, a condenser, a capillary tube, an evaporator, and a refrigerant pipe, and at least a portion of the refrigerant pipe is inserted into the inside of the ice making compartment to directly cool the ice making compartment.

Also, the refrigerator may further include a water tank compartment which is formed between the freezing compartment and the refrigerating compartment inside the body.

The water tank compartment may have a water filter purifying water and a water tank storing water.

The refrigerator may further include a third intermediate insulation wall which insulates the water tank compartment from the ice making compartment.

Also, the refrigerator may further include a dispenser which dispenses ice in the ice making compartment and water in the water tank compartment and which has a dispensing space disposed in front of the water tank compartment
The refrigerator may further include a fourth intermediate insulation wall which insulates the water tank compartment from the dispensing space.

In accordance with another aspect of the present disclosure, a refrigerator includes a body; a freezing compartment formed inside the body and having an open front portion; a refrigerating compartment formed inside the body and having an open front portion; an ice making compartment formed between the freezing compartment and the refrigerating compartment inside the body and having an open front portion; a freezing compartment door closing the open front portion of the freezing compartment; a refrigerating compartment door closing the open front portion of the refrigerating compartment; and a front insulation wall which covers the open front portion of the ice making compartment.

The front insulation wall may have an opening, and the opening may be closed by an ice bucket which is slidingly inserted into or drawn from the ice making compartment.

The ice bucket may include a storage space to store ice, a crushing space to crush ice, an auger to move the ice in the storage space into the crushing space, and an insulation cover with a corresponding size to the opening to cover the opening.

In accordance with another aspect of the present disclosure, a refrigerator includes a body; a freezing compartment formed inside the body; a refrigerating compartment formed inside the body; an ice making compartment formed between the freezing compartment and the refrigerating compartment inside the body; a first intermediate insulation wall insulating the ice making compartment from the freezing compartment; and a second intermediate insulation wall insulating the ice making compartment from the refrigerating compartment.

According to the present disclosure, an ice making efficiency of a side by side type refrigerator can be enhanced.

Also, an ice bucket can be inserted into or drawn from an ice making compartment without opening a door. Therefore, an ice bucket can be easily inserted or drawn, and it is possible to reduce energy consumption.

Further, a distance between a water tank and a dispenser can be shortened so that a water supplying pipe can be simplified and the reliability of a water supplying system can be enhanced.

These and/or other aspects of the disclosure will become apparent and more readily appreciated from the following description of the embodiments, taken in conjunction with the accompanying drawings in which:
FIG. 1 is a perspective view of an appearance of a refrigerator according to an embodiment of the present disclosure.
FIG. 2 is a front view of an appearance of a refrigerator of FIG. 1.
FIG. 3 is a cross-sectional view of a refrigerator along with I-I line of FIG. 2.
FIG. 4 is a cross-sectional view of a refrigerator along with II-II line of FIG. 2.
FIG. 5 is a cross-sectional view of a refrigerator along with III-III line of FIG. 2.
FIG. 6 is a view illustrating a water supplying assembly of a refrigerator of FIG. 1.

Reference will now be made in detail to embodiments of the present disclosure, examples of which are illustrated in the accompanying drawings, wherein like reference numerals refer to like elements throughout. Also, although the present disclosure illustrates a side by side type refrigerator as an example, the present disclosure may be applied to various types of refrigerators such as a French-door refrigerator, a refrigerator having a top or bottom mounted freezer, and so on.

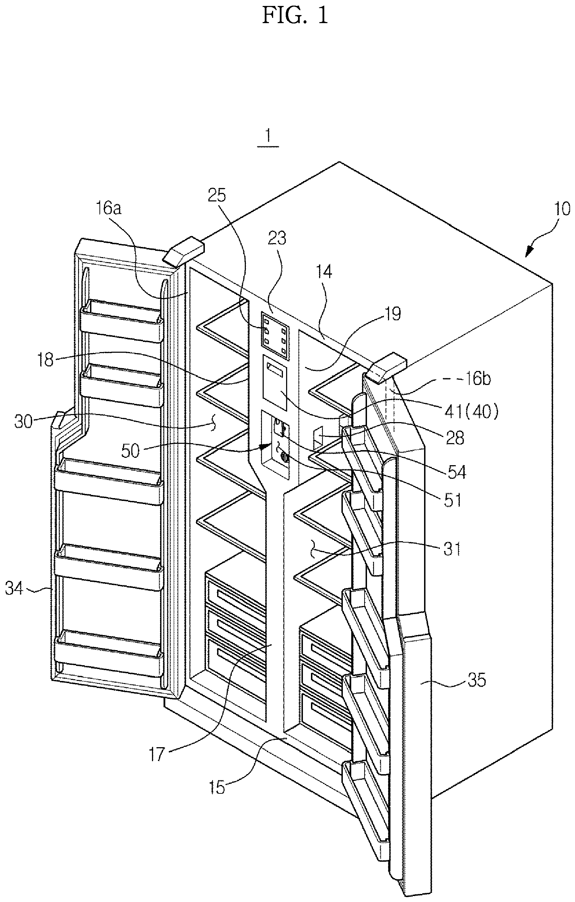

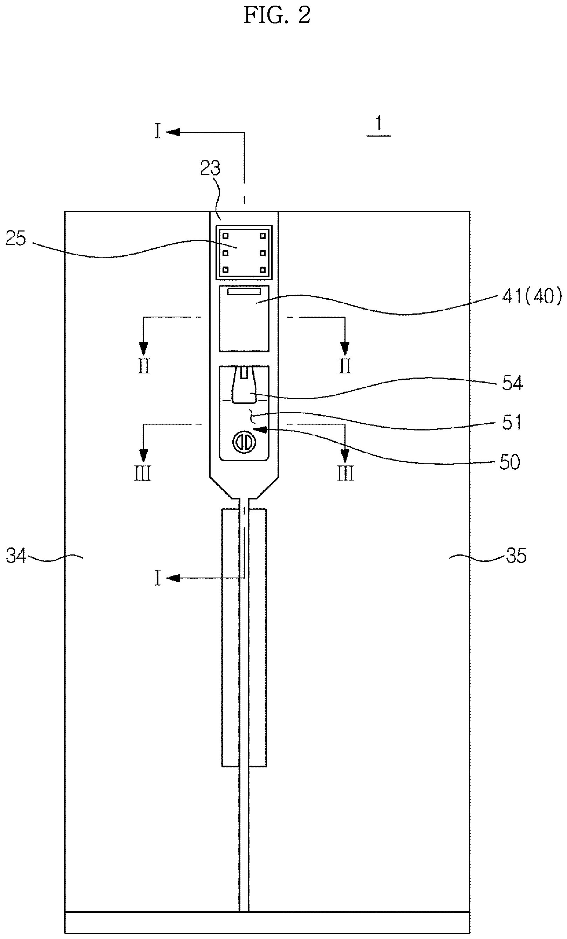

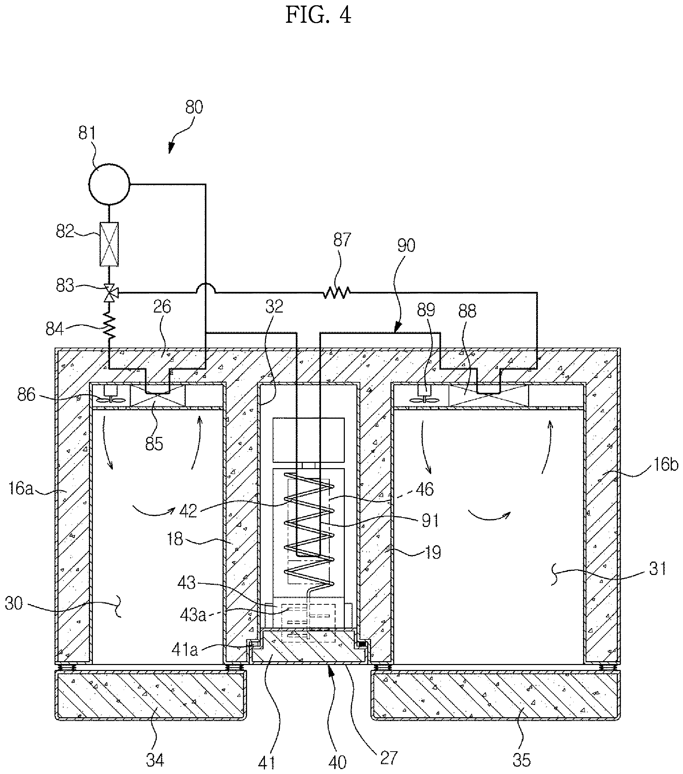

Referring to FIG. 1 to FIG. 6, a refrigerator 1 includes a body 10 having compartments 30, 31, 32, and 33, and a cooling energy supplying device 80 (FIG. 4) which supplies a cooling energy to the compartment 30, 31, 32, and 33.

The compartments 30, 31, 32, and 33 include a freezing compartment 30 which freezes and stores foods, a refrigerating compartment 31 which refrigerates and stores foods, an ice making compartment 32 which makes ice, and a water tank compartment 33 which accommodates a water tank 61.

The freezing compartment 30 is disposed on a left side inside the body 10, and the refrigerating compartment 31 is disposed on a right side inside the body 10. The position of the freezing compartment 30 and the refrigerating compartment 31 may be changed with each other. The ice making compartment 32 is formed between the freezing compartment 30 and the refrigerating compartment 31 inside the body 10. The water tank compartment 33 is formed below the ice making compartment 32 between the freezing compartment 30 and the refrigerating compartment 31 inside the body 10.

The freezing compartment 30 is formed with its front portion open, and the open front portion of the freezing compartment 30 can be closed by a freezing compartment door 34 which is rotatably connected to the body 10. The refrigerating compartment 31 is formed with its front portion open, and the open front portion of the refrigerating compartment 31 can be closed by a refrigerating compartment door 35 which is rotatably connected to the body 10.

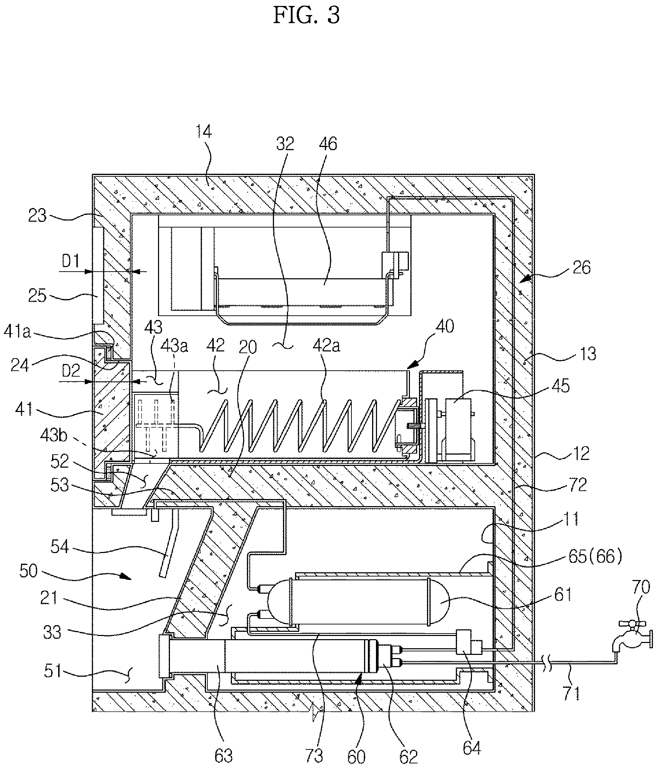

The ice making compartment 32 is formed with all sides insulated except a front open portion 24 (FIG. 3) through which an ice bucket 40 can be accessible, and the front open portion 24 can be closed by a insulation cover 41 of the ice bucket 40. The ice bucket 40 is also referred to as an ice box or ice container.

The freezing compartment door 34 and the refrigerating compartment door 35 is configured not to cover the ice bucket 40 when the doors 34 and 35 are in a closed state so that the ice bucket 40 can be inserted into or drawn from the ice making compartment 32 without opening either of the freezing compartment and the refrigerating compartment doors 34, 35. In other words the ice bucket 40 is provided separately from both the freezing and refrigerating compartments, so that it is accessible while both the freezing compartment and refrigerating compartment doors are closed.

Meanwhile, the refrigerator 1 may have a dispenser 50 which dispenses water or ice. The dispenser 50 includes a dispensing space 51 where water or ice can be obtained by putting a container such as a cup etc., an operation lever 54 which operates the dispenser 50, a purified water discharging pipe 53 which connects the water tank 61 and the dispensing space 51, an ice guide channel 52 which connects the ice bucket 40 and the dispensing space 51. The dispensing space 51 may be positioned in front of the water tank compartment 33 below the ice making compartment 32.

Meanwhile, the body 10 may include an inner case 11 (FIG. 3), an outer case 12 (FIG. 3) which is combined to an outside of the inner case 11 so as to form an appearance of a refrigerator, and an insulation material 13 (FIG. 3) disposed between the inner case 11 and the outer case 12. The inner case 11 may be made of a resin material, and the outer case 12 may be made of a metal material. The insulation material 13 may be urethane foam.

The body 10 may have an upper insulation wall 14, a bottom insulation wall 15, two side insulation walls 16a and 16b, a rear insulation wall 26, a plurality of intermediate insulation walls 17, 18, 19, 20, and 21, and a front insulation wall 23 in order to insulate the compartments 30, 31, 32, and 33.

The upper insulation wall 14, the bottom insulation wall 15, the two side insulation walls 16a and 16b, and the rear insulation wall 26 may form the compartments 30, 31, 32, and 33 in a shape of a box with its front portion open.

The plurality of intermediate insulation walls 17, 18, 19, 20, and 21 are disposed inside the box and includes a main intermediate insulation wall 17, a first intermediate insulation wall 18, a second intermediate insulation wall 19, a third intermediate insulation wall 20 (FIG. 3), and a fourth intermediate insulation wall 21 (FIG. 3).

The main intermediate insulation wall 17 insulates and separates the freezing compartment 30 from the refrigerating compartment 31, and extends upwardly from the bottom insulation wall 15. The main intermediate insulation wall 17 may extend vertically.

The first intermediate insulation wall 18 insulates and separates the ice making compartment 32 from the freezing compartment 30, and insulates and separates the water tank compartment 33 from the freezing compartment 30 at the same time. The first intermediate insulation wall 18 may be formed to connect the main intermediate insulation wall 17 and the upper insulation wall 14.

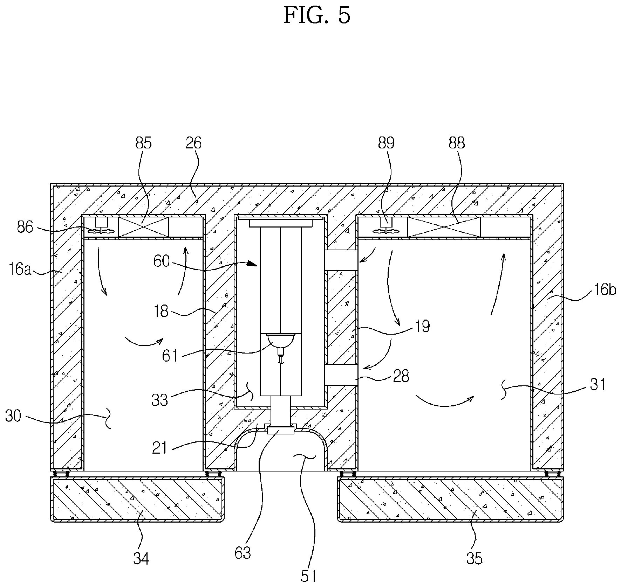

The second intermediate insulation wall 19 insulates and separates the ice making compartment 32 from the refrigerating compartment 31, and insulates and separates the water tank compartment 33 from the refrigerating compartment 31 at the same time. The second intermediate insulation wall 19 may be formed to connect the main intermediate insulation wall 17 and the upper insulation wall 14. A cooling air supplying channel 28 (FIG. 5) may be provided in order to supply the cooling air in the refrigerating compartment 31 to the water tank compartment 33 in a portion of the second intermediate insulation wall 19 which separates the water tank compartment 33 from the refrigerating compartment 31.

The third intermediate insulation wall 20 insulates and separates the ice making compartment 32 from the water tank compartment 33, and extends forwardly from the rear insulation wall 26. The third intermediate insulation wall 20 may extend horizontally. The fourth intermediate insulation wall 21 insulates and separates the water tank compartment 33 from the dispensing space 51 of the dispenser 50, and may extend downwardly from the third intermediate insulation wall 20.

Finally, the front insulation wall 23 insulates a front portion of the ice making compartment 32 and may be disposed between a front portion of the first intermediate insulation wall 18 and a front portion of the second intermediate insulation wall 19. A front opening 24 may be provided in the front insulation wall 23. As mentioned before, the ice bucket 40 can be inserted into or drawn from the ice making compartment 32 through the front opening 24, and the front opening 24 can be closed by the insulation cover 41 of the ice bucket 40. Further, a control panel 25 may be provided in a front surface of the front insulation wall 23, and the control panel 25 can display operation information of the refrigerator 1 or receive operation commands. Although the front insulation wall 23 is illustrated as having its front surface positioned in a same plane with a front portion of the first intermediate insulation wall 18 and a front portion of the second intermediate insulation wall 19, the front insulation wall 23 may protrude forwardly to have its front surface positioned in a same plane with a front surface of the refrigerator compartment door 34 and a front surface of the freezing compartment door 35.

The ice making compartment 32 is not covered by the freezing compartment door 34 and the refrigerating compartment door 35 but covered only by the front insulation wall 23 and the insulation cover 41 of the ice bucket 40 so that the front insulation wall 23 and the insulation cover 41 of the ice bucket 40 should have predetermined thickness D1 and D2 sufficient to insulate the ice making compartment 32. Also, it is preferable to make the thickness D1 of the front insulation wall 23 and the thickness D2 of the insulation cover 41 of the ice bucket 40 consistent with each other.

Thus, the ice making compartment 32 is able to be insulated by the upper insulation wall 14, the rear insulation wall 26, the first intermediate insulation wall 18, the second intermediate insulation wall 19, the third intermediate insulation wall 20, and the front insulation wall 23.

Inside the ice making compartment 32, there is an ice maker 46 generating ice, the ice bucket 40 storing the ice generated from the ice maker 46, and an auger motor 45 driving the ice bucket 40.

The ice bucket 40 further includes the insulation cover 41 as mentioned before, a storage space 42 to store ice, and a crushing space 43 to crush ice, an auger 42a to move ice in the storage space 42 into the crushing space 43.

The insulation cover 41 may have a sealing member 41a to seal the front insulation wall 23. An ice crushing blade 43a and discharging port 43b to discharge ice to an outside of the ice bucket 40 may be provided in the crushing space 43.

The ice generated in the ice maker 46 can fall into the storage space 42 after being separated from the ice maker 46 through an ice separating device such as an ejector (not shown) and/or an ice separating heater (not shown) etc. The ice in the storage space 42 may be moved forwardly to the crushing space 43 by the rotation of the auger 42a, and then be crushed into shattered ice in the crushing space 43. Shattered ice crushed in the crushing space 43 or unshattered ice cubes may be discharged to the dispensing space 51 through the discharging port 43b and the ice guide channel 52.

Meanwhile, a water supplying assembly 60 may be provided in the water tank compartment 33 in order to supply water to the ice maker 46 and the dispenser 50.

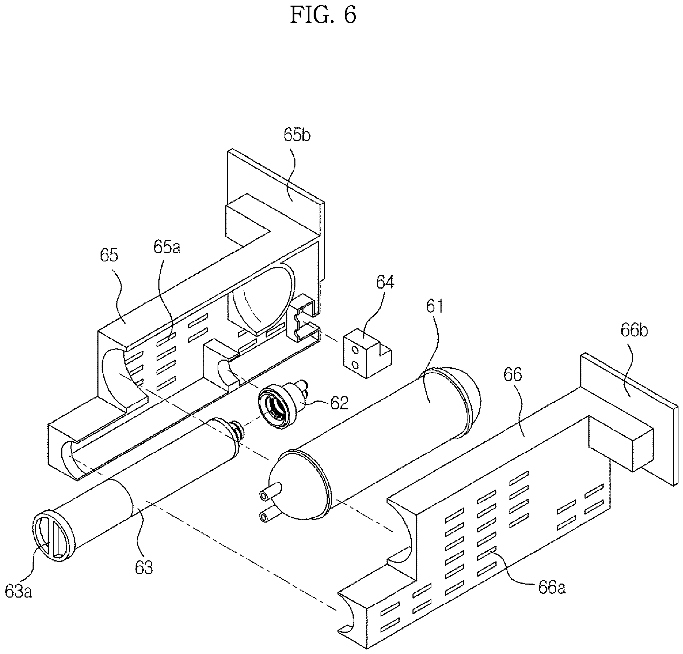

As shown in FIG. 3 and FIG. 6, the water supplying assembly 60 may have a water tank 61 which stores water supplied from outside water source 70 such as a water pipe tap etc., a water filter 60 which purifies the water which will be supplied to the water tank 61, a water path switching valve 64 which directs water having passed through the water filter 60 either to the water tank 61 or to the ice maker 46, and cases 65 and 66 which accommodates the above mentioned components.

As such configuration, the water supplying assembly 60 can be provided as a module of which all components are accommodated inside the cases 65 and 66. Each case 65 and 66 may have at least one air slot 65a and 66a through which a cooling air flows in and a connection portion 65b and 66b with which the water supplying assembly 60 can be mounted to the inner case 11 inside the water tank compartment 33. However, the shape of the connection portion 65b and 66b according to the present disclosure is illustrated as an example, and therefore is not limited to this disclosure, and can be anything as long as it is able to connect the water supplying assembly 60 to the water tank compartment 33.

Meanwhile, the water supplying assembly 60 may have a connector 62 into which the water filter 63 is detachably mounted. Therefore, the water filter 63 purifies water in connection with the connector 62 in a normal operation state, and can be detached from the connector 62 in cases of replacement and cleaning. Further, a knob 63b which can be manipulated by a user's hand may be provided with the water filter 63 to facilitate detachment of the water filter 63 from the connector 62, and the knob 63b may be exposed to a front portion of the water tank compartment 33 through an opening in the further intermediate insulation wall 21 as shown in FIG. 3. Therefore, a user can easily draw the water filter 63 by grabbing the knob 63b.

With above mentioned configuration, the water in the outside water source 70 can be supplied to the water filter 63 through a first water pipe 71, and then the water purified in the water filter 63 may be supplied to the ice maker 46 through a second water pipe 72 or may be supplied to the water tank 61 through a third water pipe 73. The water in the water tank 61 may be cooled down to an appropriate temperature to be dispensed and then be stored in the water tank 61. The cooled water in the water tank 61 may be dispensed to the dispensing space 51 through the purified water discharging pipe 53.

In particularly, since the dispensing space 51 of the dispenser 50 is provided in front of the water tank compartment 33, the purified water discharging pipe 53 which connects the water tank 61 and the dispensing space 51 can be shortened, and the connecting structure of the purified water discharging pipe 53 can be simplified.

Meanwhile, in case a refrigerator may not have a dispenser unlike this disclosure, the water tank compartment 33 may be used in other use such as a wine storing compartment or a rapid cooling compartment etc.

Referring to FIG. 4 and FIG. 5, the cooling energy supplying device 80 of the refrigerator 1 according to the embodiment of the present disclosure will be described next.

The cooling energy supplying device 80 may include a compressor 81 which compresses a refrigerant, a condenser 82 which condenses the compressed refrigerant, capillary tubes 84 and 87 which expand the refrigerant, evaporators 85 and 88 which evaporate the refrigerant so as to make a cooling air, blower fans 86 and 89 which circulate the cooling air, and a refrigerant pipe 90 which guides the refrigerant. The compressor 81 and the condenser 82 may be provided in a machinery room (not shown) disposed in a rear bottom portion of the body 10.

Two cooling cycles may be made by the cooling energy supplying device 80. One cooling cycle can supply a cooling energy to the freezing compartment 30, and the other cooling cycle can supply a cooling energy to the refrigerating compartment 31 and the ice making compartment 32.

For this purpose, each evaporator 85 and 88 can be installed in the freezing compartment 30 and the refrigerating compartment 31 respectively, and the refrigerant pipe 90 passing through the evaporator 88 of the refrigerating compartment 31 may pass through the ice making compartment 32. In other words, the ice making compartment 32 of the refrigerator 1 according to the present disclosure can receive a cooling energy directly from the refrigerant pipe 91 which is disposed in the ice making compartment 32.

The refrigerant pipe 91 which is disposed in the ice making compartment 32 may be designated as an ice making compartment refrigerant pipe 91, and the ice making compartment refrigerant pipe 91 may contact the ice maker 46. Therefore, the ice maker 46 generates ice rapidly while it functions as an evaporator.

According to the present disclosure described before, as a side by side type refrigerator which has the freezing compartment 30 and the refrigerating compartment 31 on the left and right sides inside the body respectively and of which the freezing compartment 30 and the refrigerating compartment 31 can be closed by a pair of rotatable doors 34 and 35, a separate ice making compartment 32 insulated from the freezing compartment 30 and the refrigerating compartment 31 is provided between the freezing compartment 30 and the refrigerating compartment 31, and a portion of a refrigerant pipe is inserted into the ice making compartment 32 so as to generate ice fast by directly cooling the ice maker 46.
Further, since the ice making compartment 32 is neither opened nor closed by the freezing compartment door 34 and the refrigerating compartment door 35, there is no need to open the freezing compartment door 34 and the refrigerating compartment door 35 when the ice bucket 40 is extracted. Therefore, it is possible to reduce energy consumption by preventing a leakage of a cooling air which is caused by opening the freezing compartment door 34 and the refrigerating compartment door 35.

Meanwhile, in addition to the embodiment described above, it is possible that the ice making compartment 32 may be configured to have indirect cooling instead of direct cooling. Specifically, it is possible to cool down the ice making compartment 32 by providing a separate cooling air delivering duct which delivers a cooling air in the freezing compartment 30 to the ice making compartment 32 instead of inserting a refrigerant pipe into the ice making compartment 32. Further, it is also possible to communicate the freezing compartment 30 and the ice making compartment 32 by eliminating the first intermediate insulation wall 18.

Although a few embodiments of the present invention have been shown and described, it would be appreciated by those skilled in the art that changes may be made in these embodiments without departing from the principles of the invention, the scope of which is defined in the claims.

## Claims

1. A refrigerator, comprising:
a body (10);
a freezing compartment (30) formed inside the body;
a refrigerating compartment (31) formed inside the body;
a freezing compartment door (34) rotatably connected to the body for closing the freezing compartment;
a refrigerating compartment door (35) rotatably connected to the body for closing the refrigerating compartment;
an ice making compartment (32) formed between the freezing compartment and the refrigerating compartment inside the body and accessible without opening either of the freezing compartment and the refrigerating compartment doors; and
a front insulation wall (23) which is formed in front of the ice making compartment (32) and which insulates the ice making compartment (32),
wherein the ice making compartment (32) comprises an ice maker (46) to generate ice, an auger motor (45), and an ice bucket (40) to store the ice generated by the ice maker (46),
wherein the front insulation wall (23) comprises an opening (24) through which the ice bucket (40) is inserted into or drawn from the ice making compartment (32),
wherein the ice bucket (40) includes an insulation cover (41) which closes the opening (24), a storage space (42) to store ice, a crushing space (43) to crush ice, and an auger (42a) to move the ice in the storage space (42) into the crushing space (43), and
wherein the ice bucket (40) is configured to be inserted into or drawn from the ice making compartment (32) without opening the freezing compartment door (34) or the refrigerating compartment door (31).

2. The refrigerator of claim 1, wherein the refrigerator further comprises a first intermediate insulation wall (18) which insulates the ice making compartment from the freezing compartment and a second intermediate insulation wall (19) which insulates the ice making compartment from the refrigerating compartment.

3. The refrigerator of claim 1, wherein a thickness of the insulation cover corresponds to a thickness of the front insulation wall.

4. The refrigerator of claim 1 or 3, wherein a front surface of the front insulation wall is provided with a control panel (25) which displays operation information of the refrigerator and receives operation commands of the refrigerator.

5. The refrigerator of any one of the preceding claims, wherein the refrigerator further comprises a cooling energy supplying device (80) having a compressor (81), a condenser (82), a capillary tube (84, 87), an evaporator (85, 88) and a refrigerant pipe (90), and at least a portion of the refrigerant pipe is inserted into the inside of the ice making compartment to directly cool the ice making compartment.

## Patentansprüche

1. Kühlschrank, der Folgendes aufweist:
einen Körper (10);
ein in dem Körper gebildetes Gefrierfach (30);
ein in dem Körper gebildetes Kühlfach (31);
eine Gefrierfachtür (34), die zum Schließen des Gefrierfachs drehbar mit dem Körper verbunden ist;
eine Kühlfachtür (35), die zum Schließen des Kühlfachs drehbar mit dem Körper verbunden ist;
ein Eisherstellungsfach (32), das zwischen dem Gefrierfach und dem Kühlfach im Körper gebildet ist und ohne Öffnen der Gefrierfach- und der Kühlfachtür zugänglich ist; und
eine vordere Wärmedämmwand (23), die vor dem Eisherstellungsfach (32) gebildet ist und die das Eisherstellungsfach (32) isoliert;
wobei das Eisherstellungsfach (32) eine Eismaschine (46) zum Erzeugen von Eis, einen Schneckenmotor (45) und einen Eisbehälter (40) zum Lagern des von der Eismaschine (46) erzeugten Eises aufweist,
wobei die vordere Wärmedämmwand (23) eine Öffnung (24) aufweist, durch die der Eisbehälter (40) in das oder aus dem Eisherstellungsfach (32) eingesetzt oder gezogen wird,
wobei der Eisbehälter (40) eine Wärmedämmabdeckung (41), die die Öffnung (24) schließt, einen Lagerraum (42) zum Lagern von Eis, einen Zertrümmerungsraum (43) zum Zertrümmern von Eis und eine Schnecke (42a) zum Bewegen des Eises im Lagerraum (42) in den Zertrümmerungsraum (43) enthält, und
wobei der Eisbehälter (40) gestaltet ist, um ohne Öffnen der Gefrierfachtür (34) oder der Kühlfachtür (31) in das bzw. aus dem Eisherstellungsfach (32) eingesetzt oder gezogen zu werden.

2. Kühlschrank nach Anspruch 1, wobei der Kühlschrank ferner eine erste Wärmedämmungszwischenwand (18), die das Eisherstellungsfach vom Gefrierfach isoliert, und eine zweite Wärmedämmungszwischenwand (19), die das Eisherstellungsfach vom Kühlfach isoliert, aufweist.

3. Kühlschrank nach Anspruch 1, wobei eine Dicke der Wärmedämmungsabdeckung einer Dicke der vorderen Wärmedämmwand entspricht.

4. Kühlschrank nach Anspruch 1 oder 3, wobei eine vordere Oberfläche der vorderen Wärmedämmungswand mit einem Bedienfeld (25) versehen ist, das Betriebsinformationen des Kühlschranks anzeigt und Befehle für den Betrieb des Kühlschranks empfängt.

5. Kühlschrank nach einem der vorhergehenden Ansprüche, wobei der Kühlschrank ferner eine Kühlenergieversorgungsvorrichtung (80) mit einem Kompressor (81), einem Verflüssiger (82), einer Kapillarröhre (84, 87), einem Verdampfer (85, 88) und einem Kältemittelrohr (90) aufweist und wenigstens ein Teil des Kältemittelrohrs in das Innere des Eisherstellungsfachs eingefügt ist, um das Eisherstellungsfach direkt zu kühlen.

## Revendications

1. Réfrigérateur, comprenant :
un corps (10) ;
un compartiment de congélation (30) formé à l'intérieur du corps ;
un compartiment de réfrigération (31) formé à l'intérieur du corps ;
une porte de compartiment de congélation (34) raccordée de façon pivotante au corps pour fermer le compartiment de congélation ;
une porte de compartiment de réfrigération (35) raccordée de façon pivotante au corps pour fermer le compartiment de réfrigération ;
un compartiment de production de glaçons (32) formé entre le compartiment de congélation et le compartiment de réfrigération à l'intérieur du corps et accessible sans ouvrir la porte du compartiment de congélation ou celle du compartiment de réfrigération ; et
une paroi isolante frontale (23) qui est formée devant le compartiment de production de glaçons (32) et qui isole le compartiment de production de glaçons (32),
dans lequel le compartiment de production de glaçons (32) comprend une machine à glaçons (46) pour la production de glaçons, un moteur à vis sans fin (45) et un seau à glace (40) pour stocker les glaçons produits par la machine à glaçons (46),
dans lequel la paroi isolante frontale (23) comprend une ouverture (24) par laquelle le seau à glace (40) est introduit dans ou retiré du compartiment de production de glaçons (32),
dans lequel le seau à glace (40) est muni d'un couvercle isolant (41) qui ferme l'ouverture (24), d'une zone de stockage (42) pour le stockage des glaçons, d'une zone de broyage (43) pour le broyage des glaçons, et d'une vis sans fin (42a) pour déplacer dans la zone de broyage (43) les glaçons qui se trouvent dans la zone de stockage (42), et
dans lequel le seau à glace (40) est configuré pour être inséré dans ou retiré du compartiment de production de glaçons (32) sans ouvrir la porte de compartiment de congélation (34) ou la porte de compartiment de réfrigération (31).

2. Réfrigérateur selon la revendication 1, dans lequel le réfrigérateur comprend en outre une première paroi isolante intermédiaire (18) qui isole le compartiment de production de glaçons du compartiment de congélation, et une deuxième paroi isolante intermédiaire (19) qui isole le compartiment de production de glaçons du compartiment de réfrigération.

3. Réfrigérateur selon la revendication 1, dans lequel une épaisseur du couvercle isolant correspond à une épaisseur de la paroi isolante frontale.

4. Réfrigérateur selon la revendication 1 ou la revendication 3, dans lequel une surface frontale de la paroi isolante frontale est munie d'un panneau de commande (25) qui affiche des informations de fonctionnement du réfrigérateur et qui reçoit des commandes de fonctionnement du réfrigérateur.

5. Réfrigérateur selon une quelconque des revendications précédentes, dans lequel le réfrigérateur comprend en outre un dispositif de fourniture d'énergie de refroidissement (80) possédant un compresseur (81), un condenseur (82), un tube capillaire (84, 87), un évaporateur (85, 88) et un tuyau de fluide frigorigène (90), et au moins une partie du tuyau de fluide frigorigène est insérée à l'intérieur du compartiment de production de glaçons pour refroidir directement le compartiment de production de glaçons.
